Europäisches Patentamt

European Patent Office

Office européen des brevets

(11) Veröffentlichungsnummer: **0 075 198**
**A1**

(12) **EUROPÄISCHE PATENTANMELDUNG**

(21) Anmeldenummer: 82108281.5

(22) Anmeldetag: 09.09.82

(51) Int. Cl.³: **B 01 D 1/18**, B 01 D 1/20,
B 05 B 1/34, B 01 J 2/04

(30) Priorität: 22.09.81 DE 3137565

(43) Veröffentlichungstag der Anmeldung: 30.03.83
Patentblatt 83/13

(84) Benannte Vertragsstaaten: **CH DE GB LI**

(71) Anmelder: **BAYER AG, Zentralbereich Patente, Marken
und Lizenzen, D-5090 Leverkusen 1, Bayerwerk (DE)**

(72) Erfinder: **Mölls, Hans-Heinz, Dr.,
Max-Beckmann-Strasse 29, D-5090 Leverkusen (DE)**
Erfinder: **Kaspar, Vaclav, Dipl.-Ing., Morgengraben 2,
D-5000 Köln 80 (DE)**
Erfinder: **Hörnle, Reinhold, Dr., Hufelandstrasse 42,
D-5000 Köln 80 (DE)**

(54) Verfahren und Vorrichtung zum Erzeugen grober, staubarmer Granulate durch Sprühtrocknen von Feststoffen.

(57) In einem Sprühtrockner läßt sich ein staubarmes Granulat einheitlichen Trocknungsgrades mit einem größeren mittleren Durchmesser erzeugen, wenn die Dispersion oder Lösung durch mindestens zwei Einlässe (4) in die Drallkammer (1) einer Düse, die zwei hintereinander angeordnete Bohrungsplatten (2, 3) aufweist, eingeführt und zerstäubt wird, wobei der Durchmesser $d_2$ der Austrittsöffnung (6) der zweiten Bohrungsplatte (3) größer ist als der Durchmesser $d_1$ der Durchtrittsöffnung (5) der ersten Bohrungsplatte (2).

EP 0 075 198 A1

BAYER AKTIENGESELLSCHAFT     5090 Leverkusen, Bayerwerk

Zentralbereich            21. Sep. 1981
Patente, Marken und Lizenzen   Mr(Hö)/Ma-c

## Verfahren und Vorrichtung zum Erzeugen grober, staubarmer Granulate durch Sprühtrocknen von Feststoffen

Die Erfindung richtet sich auf ein Verfahren zum Erzeugen grober, staubarmer Granulate durch Sprühtrocknen von Feststoffen, wobei eine Dispersion oder Lösung in einem Sprühtrockner unter Druck aus Düsen zerstäubt wird und der Feststoff, gegebenenfalls nach einer Sichtung, im unteren Bereich des Trockners entnommen wird. Die Erfindung betrifft auch eine Vorrichtung zur Durchführung des Verfahrens, enthaltend mindestens eine Druckdüse als Zerstäubungsorgan mit jeweils vorgeordneter Drallkammer.

Bisher werden zum Sprühtrocknen von Dispersionen Druckdüsen eingesetzt, die aus einer Drallkammer und einer Bohrungsplatte mit Austrittsöffnung bestehen. Der mittlere Durchmesser, der mit solchen Düsen sprühgetrockneten Produkte liegt im Bereich 100 bis 200 $\mu$m mit einem relativ hohen Feinanteil ($\stackrel{<}{=}$ 50 $\mu$m). Je nach ihrer Verwendung ist es erforderlich, die Produkte in einem nachgeschalteten Arbeitsgang zu entstauben. Insbesondere bei Dispersionsfarbstoffen ist eine solche Entstaubung oft schwierig; außerdem sind Zusätze von Entstaubungsmitteln erforderlich.

Le A 21 127

Gemäß der US-PS 3 948 444 ist es bekannt, beim Ausbringen von Pflanzenschutzmitteln ein spezielles Sprühverfahren einzusetzen, bei dem das versprühte Produkt relativ große Tröpfchen bildet und eine unerwünschte Nebelbildung vermieden wird.

In der US-PS 3 934 823 ist eine Sprühdüse beschrieben, die aus zwei hintereinandergeschalteten Kammern besteht, mit der relativ große Tröpfchen erzeugt werden können, wenn bestimmte Größenverhältnisse in der Sprühdüse eingehalten werden. Bei dieser Düse tritt Inhomogenität des Sprühkegels durch Strähnenbildung des austretenden Sprühstrahls auf, wodurch ungleichmäßig getrocknetes Produkt anfällt.

Außerdem ist eine Zentrifugaldruckdüse bekannt (DE-OS 2 417 345), bei der die Flüssigkeit über mehrere Flüssigkeitseinlässe der Wirbelkammer zugeführt wird.

Es besteht die Aufgabe, ein Verfahren und eine Vorrichtung zu finden, mit denen grobes, staubarmes Granulat herstellbar ist, das einen einheitlichen Trocknungsgrad besitzt.

Gegenstand der Erfindung ist ein Verfahren zum Erzeugen grober, staubarmer Granulate durch Sprühtrocknen von Feststoffen, das dadurch gekennzeichnet ist, daß die Dispersion oder Lösung unter Druck durch mindestens zwei Einlässe so in eine Drallkammer der Düse eingespeist wird, daß sich eine Rotationsströmung ausbildet,

Le A 21 127

daß sie danach durch eine Durchtrittsöffnung strömt, wobei die Rotation erhalten bleibt, und dann die Dispersion oder Lösung tröpfchenartig durch eine Austrittsöffnung austritt, wobei der Durchströmquerschnitt der Austrittsöffnung denjenigen der Durchtrittsöffnung überschreitet.

Es hat sich nämlich überraschenderweise gezeigt, daß sich viele Feststoffe vorteilhaft sprühtrocknen lassen, wenn das Zerstäubungsorgan so ausgebildet ist, daß ein bestimmtes Durchmesserverhältnis der Öffnungen der Bohrungsplatten eingehalten wird.

Nach einer alternativen Durchführungsform des Verfahrens erweitert sich der Durchströmquerschnitt zwischen der Durchtrittsöffnung und der Austrittsöffnung, wobei die Rotation der Flüssigkeit erhalten bleibt.

Nach dem neuen Verfahren bzw. mit der Vorrichtung wird eine gewünschte Vergröberung des Kornspektrums erreicht und ein gleichmäßig trockenes, rieselfähiges, staubarmes Granulat erhalten. Ein Zusatz von Entstaubungsmitteln ist in der Regel nicht erforderlich. Wenn es aufgrund des gröberen Granulats und der Abmessungen des Sprühtrockners nicht gelingt, die übliche Restfeuchte von 5 bis 8 % zu erreichen, ist es zweckmäßig, daß nach dem Sprühtrocknen ein Nachtrocknen des gewonnenen Granulates, z.B. in einem Schüttguttrockner, erfolgt.

Das neue Verfahren ist vorzugsweise gekennzeichnet durch die Anwendung zum Granulieren von Farbstoffen, Pigmenten, optischen Aufhellern, Tensiden, Pflanzenschutzmitteln, Arzneimittelwirkstoffen.

Die Vorrichtung zur Durchführung des Verfahrens ist
dadurch gekennzeichnet, daß das Zerstäubungsorgan
eine Druckdüse mit zwei hintereinander angeordneten
Bohrungsplatten enthält, wobei der Durchmesser $d_1$ der
Öffnung in der ersten Bohrungsplatte kleiner ist als
der Durchmesser $d_2$ der Öffnung in der zweiten Bohrungsplatte, und daß die Drallkammer mindestens zwei Einlässe aufweist.

Es hat sich gezeigt, daß es nicht immer erforderlich
ist, daß die beiden Bohrungsplatten unmittelbar hintereinander angeordnet sind.

Zwischen den beiden Bohrungsplatten kann deshalb alternativ eine Kammer vorhanden sein, deren Durchmesser $d_3$
größer ist als der Durchmesser $d_2$ der Öffnung der zweiten Bohrungsplatte. Nach einer weiteren besonderen Ausführungsform verringert sich, in Strömungsrichtung gesehen, der Durchmesser in den Öffnungen der Bohrungsplatten und/oder der Kammer zwischen den Bohrungsplatten.

Soweit es sich bei den Öffnungen der Bohrungsplatten
und/oder der Kammer um solche mit sich verringerndem
Durchmesser handelt, ist für das einzuhaltende Verhältnis der Durchmesser zueinander jeweils der minimale Durchmesser der Öffnungen maßgeblich.

Le A 21 127

Die neue Vorrichtung ist in der Zeichnung in mehreren Ausführungsbeispielen dargestellt und nachstehend näher erläutert. Es zeigen:

Fig. 1    einen Längsschnitt durch eine Druckdüse;

Fig. 2    einen Schnitt gemäß Linie A - A in Fig. 1;

Fig. 3    einen Längsschnitt durch eine Druckdüse mit einer Kammer zwischen den Bohrungsplatten.

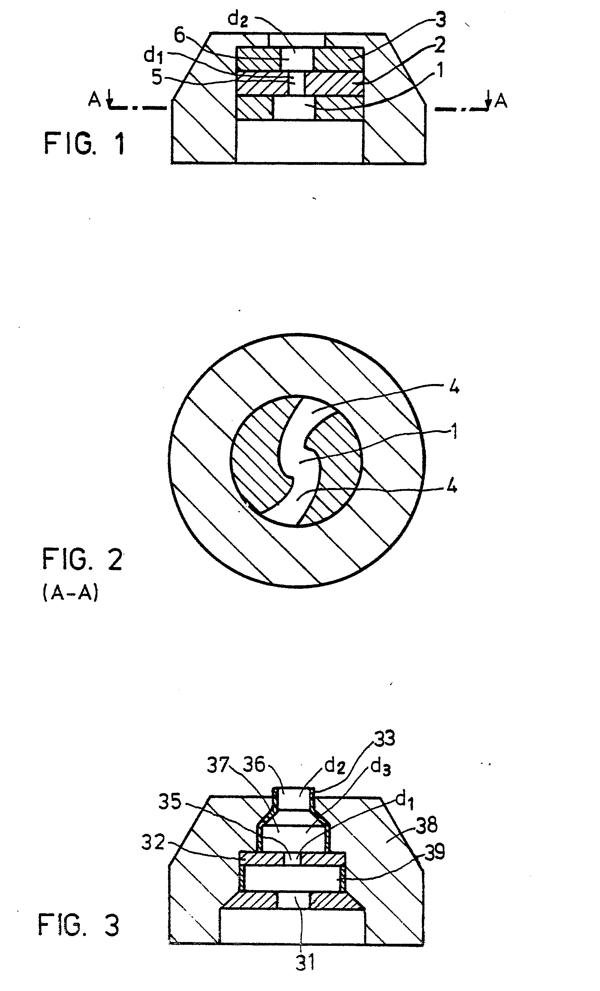

In Fig. 1, 2 enthält die Druckdüse im wesentlichen neben einer Drallkammer 1, in der die Strömung in Rotation versetzt werden kann, zwei Bohrungsplatten 2, 3. Die Dispersion wird über zwei tangential einlaufende Einlässe 4 in die Drallkammer 1 eingeführt, wo sich eine Drallströmung aufbaut. Die Drallkammer 1 ist durch eine erste Bohrungsplatte 2 abgeschlossen. Der Durchmesser ihrer zentralen, zylindrischen Durchtrittsöffnung 5 beträgt $d_1$. Unmittelbar dahinter ist die zweite Bohrungsplatte 3 mit einer zentralen, zylindrischen Austrittsöffnung 6 angeordnet. Die Strömungsquerschnitte sind rotationssymmetrisch aufgebaut, so daß beim Durchtritt der Strömung durch die Bohrungsplatten 2 und 3 die Rotation nicht abgebaut wird. Der Durchmesser $d_2$ der Austrittsöffnung 6 ist größer als der Durchmesser $d_1$ der Durchtrittsöffnung 5.

In Figur 3 enthält die Druckdüse neben einer Drallkammer 31 ebenfalls zwei Bohrungsplatten 32, 33 mit einer Durchtrittsöffnung 35 bzw. einer Austrittsöffnung 36. Zwischen den beiden Bohrungsplatten 32, 33 ist eine kreiszylindrische Kammer 37 mit dem Durchmesser $d_3$ an-

geordnet. Die zweite Bohrungsplatte 33 mit der Öffnung 36 vom Durchmesser $d_2$ wird hier vom Gehäuse 38 gebildet. Außerdem ist eine mit der Drallkammer 31 zusammenwirkende Vorkammer 39 vorhanden.

## Beispiel:

In einem Sprühtrockner mit einer Druckdüse gemäß Fig. 1, 2, wurde eine 30 %-ige Lösung eines Dispergiermittels getrocknet. Das Dispergiermittel war ein Kondensationsprodukt aus Diphenylethersulfonsäure und Formaldehyd. Der Durchmesser $d_1$ der Durchtrittsöffnung 5 betrug 0,89 mm, der Durchmesser $d_2$ der Austrittsöffnung 6 betrug 1,9 mm. Es ergab sich somit ein Verhältnis $d_1/d_2$ von 2,13. Man erhält aufgrund der gleichmäßigen Trocknung Granulat mit einem mittleren Durchmesser $d_m$ von 150 $\mu$m.

## Vergleichsbeispiel:

Setzt man dagegen eine handelsübliche Dralldüse mit einem Durchmesser der Austrittsöffnung von ebenfalls 0,89 mm ein, so erhält man ein Granulat mit einem mittleren Durchmesser $d_m$ von 98 $\mu$m mit einem erheblichen Staubanteil.

In beiden Fällen waren die Düsen in einem handelsüblichen Zerstäubungstrockner (70 kg/h Wasserverdampfung, Gesamthöhe 15 m, Innendurchmesser 1,5 m, Durchmesser des Ringkanals 2,5 m) eingebaut.

Le A 21 127

Patentansprüche:

1) Verfahren zum Erzeugen grober, staubarmer Granulate durch Sprühtrocknen von Feststoffen, wobei eine Dispersion oder Lösung in einem Sprühtrockner unter Druck aus Düsen zerstäubt wird und der Feststoff im unteren Bereich des Trockners entnommen wird, dadurch gekennzeichnet, daß die Dispersion oder Lösung unter Druck durch mindestens zwei Einlässe so in eine Drallkammer der Düse eingespeist wird, daß sich eine Rotationsströmung ausbildet, daß sie danach durch eine Durchtrittsöffnung strömt, wobei die Rotation erhalten bleibt und dann die Lösung oder Dispersion tröpfchenartig durch eine Austrittsöffnung austritt, wobei der Durchströmquerschnitt der Austrittsöffnung denjenigen der Durchtrittsöffnung überschreitet.

2) Verfahren nach Anspruch 1, dadurch gekennzeichnet, daß sich der Durchströmquerschnitt zwischen der Durchtrittsöffnung und der Austrittsöffnung erweitert, wobei die Rotation der Flüssigkeit erhalten bleibt.

3) Verfahren nach Anspruch 1 oder 2, dadurch gekennzeichnet, daß nach dem Sprühtrocknen ein Nachtrocknen des gewonnenen Granulats erfolgt.

Le A 21 127

0075198

4) Verfahren nach einem der Anprüche 1 bis 3, gekennzeichnet durch die Anwendung zum Granulieren von Farbstoffen, Pigmenten, optischen Aufhellern, Tensiden, Pflanzenschutzmitteln oder Arzneimittelwirkstoffen.

5) Vorrichtung zum Durchführen des Verfahrens, enthaltend mindestens eine Druckdüse als Zerstäubungsorgan mit jeweils vorgeordneter Drallkammer (1;31) dadurch gekennzeichnet, daß das Zerstäubungsorgan eine Druckdüse mit zwei hintereinander angeordneten Bohrungsplatten (2, 3; 32, 33) enthält, wobei der Durchmesser $d_1$ der Öffnung (5; 35) in der ersten Bohrungsplatte (2; 32) kleiner ist als der Durchmesser $d_2$ der Öffnung (6; 36) in der zweiten Bohrungsplatte (3; 33), und daß die Drallkammer (1; 31) mindestens zwei Einlässe (4) aufweist.

6) Vorrichtung nach Anspruch 5, dadurch gekennzeichnet, daß zwischen den Bohrungsplatten (32, 33) eine zylindrische Kammer (37) vorhanden ist, deren Durchmesser $d_3$ größer ist als der Durchmesser $d_2$ der Öffnung (36) in der zweiten Bohrungsplatte (33).

7) Vorrichtung nach Anspruch 5 oder 6, dadurch gekennzeichnet, daß sich, in Strömungsrichtung gesehen, der Durchmesser in den Öffnungen 5, 6; 35, 36 der Bohrungsplatten (2,3; 32 33) und/oder

Le A 21 127

gegebenenfalls in der zylindrischen Kammer (7; 37) zwischen den Bohrungsplatten (35; 36) verringert.

8) Vorrichtung nach einem der Ansprüche 5 bis 7, dadurch gekennzeichnet, daß das Verhältnis der Durchmesser $d_2/d_1$ im Bereich von 1,1 bis 5 liegt.

Le A 21 127

FIG. 1

FIG. 2
(A-A)

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | --- <br> GB-A-1 131 242 (GENERAL FOODS) <br> *Seite 1, Zeilen 10-36; Seite 2, Zeilen 7-26; Abbildungen 1-3* | 1 | B 01 D 1/18 <br> B 01 D 1/20 <br> B 05 B 1/34 <br> B 01 J 2/04 |
| D,Y | --- <br> US-A-3 948 444 (K.E.REED) <br><br> *Spalte 1, Zeile 12 - Spalte 2, Zeile 33; Spalte 3, Zeile 49 - Spalte 4, Zeile 12; Spalte 4, Zeilen 59-68; Abbildungen 1-4* | 1,2,5, 6,8 | |
| D,Y | --- <br> US-A-3 934 823 (K.E.REED) <br><br> *Spalte 8, Zeile 23 - Spalte 10, Zeile 17; Abbildungen 1-5* | 1,2,5, 6,8 | |
| A | --- <br> FR-A-2 017 013 (BAYER) <br> *Seite 2, Zeilen 17-35* | 1,4 | RECHERCHIERTE SACHGEBIETE (Int. Cl. ³) |
| A | --- <br> US-A-3 741 273 (R.E.MEADE) <br> *Spalte 1, Zeilen 12-24; Spalte 1, Zeile 45 - Spalte 2, Zeile 51; Abbildung 8* | 1,3,4 | B 01 D <br> B 01 J <br> B 05 B |
| A | --- <br> US-A-3 289 732 (G.R.KOTELNIKOV) <br> *Spalte 1, Zeilen 16-57; Abbildungen 1-2* | 1,3 | |
| | ----- | | |

Der vorliegende Recherchenbericht wurde für alle Patentansprüche erstellt.

| Recherchenort <br> DEN HAAG | Abschlußdatum der Recherche <br> 08-12-1982 | Prüfer <br> PYFFEROEN K. |
|---|---|---|